Europäisches Patentamt

European Patent Office

Office européen des brevets

(19)

(11) Veröffentlichungsnummer: **0 368 879 B1**

(12)

# EUROPÄISCHE PATENTSCHRIFT

(45) Veröffentlichungstag der Patentschrift:
**11.09.91 Patentblatt 91/37**

(51) Int. Cl.$^5$: **A23G 9/28**

(21) Anmeldenummer: **88905661.0**

(22) Anmeldetag: **28.06.88**

(86) Internationale Anmeldenummer:
**PCT/DE88/00387**

(87) Internationale Veröffentlichungsnummer:
**WO 89/00383 26.01.89 Gazette 89/03**

(54) PORTIONIERER FÜR LEBENSMITTEL

(30) Priorität: **10.07.87 DE 3722822**

(43) Veröffentlichungstag der Anmeldung:
**23.05.90 Patentblatt 90/21**

(45) Bekanntmachung des Hinweises auf die
Patenterteilung:
**11.09.91 Patentblatt 91/37**

(84) Benannte Vertragsstaaten:
**AT CH DE FR GB IT LI NL SE**

(56) Entgegenhaltungen:
**CH-A- 256 655**
**DE-A-29 241 99**
**DE-C- 712 862**

(56) Entgegenhaltungen:
**GB-A- 638 268**
**GB-A- 1 143 699**
**GB-A- 1 236 024**
**GB-A- 1 583 446**
**US-A- 3 694 630**
**US-A- 3 735 101**

(73) Patentinhaber: **SCHÜLLING, Christof**
**Am Sportfeld 7**
**W-8729 Sand am Main (DE)**

(72) Erfinder: **SCHÜLLING, Christof**
**Am Sportfeld 7**
**W-8729 Sand am Main (DE)**

(74) Vertreter: **Pöhner, Wilfried Anton, Dr.**
**Kaiserstrasse 27 Postfach 63 23**
**W-8700 Würzburg 1 (DE)**

**Beschreibung**

Die Erfindung bezieht sich auf einen Portionierer für Lebensmittel, insbesondere Speiseeis, mit einem Griff und einem daran befestigten Löffel.

In der Gastronomie dienen Portionierer der Entnahme und Bemessung einer für den Verzehr geeigneten Menge. Durch Eintauchen in bzw. Abschaben von einer größeren Lebensmittelmenge — hierbei kann es sich um Speiseeis, Kartoffelpürree, Dessert, Mousse au chocolade, Sahnecreme, Reis oder dergleichen handeln — wird eine entsprechende Portion durch den als Halbschale ausgebildeten Löffel erfaßt, an den entsprechenden Abgabeort verbracht und dort in der Dessertschale, Eistüte abgelegt, was normalerweise dadurch geschieht, daß innerhalb des als Schale ausgebildeten Löffels ein Abstreifer angeordnet ist, der durch eine Betätigung des Griffes eine Schwenkbewegung entlang der Innenfläche des Löffels vollführt und auf diese Weise das entsprechende Lebensmittel abschält und in Form etwa einer Halbkugel freigibt.

Nicht zuletzt durch den Verkauf von Speiseeis ist es bekannt, den vom Kunden angeforderten Preis durch die Menge des Lebensmittels anhand der Zahl der ausgegebenen Portionen zu bestimmen. Für einen Unternehmer und Geschäftsmann ergeben sich in der Praxis häufig dadurch Probleme, daß bei Ausgabe über Angestellte eine Kontrolle über die verkaufte Menge prinzipiell unmöglich ist, so daß sich für den Mitarbeiter die Möglichkeit der persönlichen Bereicherung eröffnet und häufig genug auch wahrgenommen wird.

Hiervon ausgehend hat sich die Erfindung die Weiterentwicklung derartiger Portionierer zur Aufgabe gemacht, mit deren Hilfe eine unmittelbare und untrügliche Erfassung der ausgegebenen Gesamtmenge möglich wird.

Erfindungsgemäß werden zwei völlig unabhängig voneinander realisierbare Lösungen vorgeschlagen. Die eine besteht darin, daß im Löffel ein Temperaturfühler angeordnet ist, dessen Temperaturänderungen erfaßt und als Zählimpuls genutzt werden.

Diese erfindungsgemäße Lösung eignet sich zum Portionieren all jener Lebensmittel, die eine vom umgebenen Raum nach oben oder unten abweichende Temperatur besitzen. Dies stellt den Regelfall dar. Für den Verzehr vorgesehene Speisen, wie Pürree, Reis und die meisten Desserts besitzen eine höhere, andere Lebensmittel, wie Speiseeis, Früchte und dergleichen eine wesentlich niedrige Temperatur. So beträgt die Speiseeistemperatur normalerweise −12 bis −14 Grad Celsius.

Die Funktion ist dann wie folgt : Durch das Erfassen des Lebensmittels mit dem Portionierer kommt ein Wärmeübergang zustande, welche durch den Temperaturfühler erkannt und gemeldet wird. Diese Änderungen können vorzugsweise elektronisch erfaßt, angepaßt und als Zählimpuls Verwendung finden. Die Verarbeitung und Anpassung an das Zählgerät braucht im einzelnen nicht geschildert zu werden und ist ein mit den einschlägigen Fertigkeiten ausgestatteten Fachmann ohne weiteres geläufig, der beispielsweise die Signale des Temperaturfühlers differenziert und die Signale eines Vorzeichens einer Zählung zuführt und die anderen beispielsweise unterdrückt, so daß im Ergebnis nur der Temperaturanstieg und nicht die Temperaturabsenkung oder umgekehrt erfaßt und gezählt wird. Zur Unterdrückung von Störungen und Fehlanzeigen können Schwellen vorgegeben werden, mit deren Überschreiten erst eine Zählung erfolgt. Weiterhin können Maßnahmen dafür getroffen werden, daß nur rasche Temperaturänderungen erfaßt und gezählt werden, da natürliche Temperaturschwankungen relativ langsam verlaufen und selbstverständlich nicht erfaßt werden sollen.

Der Temperaturfühler sollte so gewählt werden, daß er möglichst schnell, das heißt trägheitslos arbeitet, insbesondere deshalb, weil über die Anbringung beispielsweise in Form eines Klebers unweigerlich eine gewisse thermische Isolation bedingt ist. Zur besseren Verarbeitung des Signales empfiehlt sich darüber hinaus Temperaturfühler mit hoher Empfindlichkeit einzusetzen, also solche die bereits bei geringer Temperaturänderung im jeweiligen Meßbereich ein kräftiges Ausgangssignal liefern. Je größer die Ausgangssignale bereits bei geringen Temperaturänderungen sind um so günstiger ist die Verarbeitung und umso rascher lassen sich geringe Temperaturschwankungen erfassen. Letzteres ist insofern von Bedeutung als die Erwärmung oder Abkühlung des Portionierers nur während einer relativ kurzen Zeit erfolgen. Die Versuche haben gezeigt, daß bereits Bruchteile von Sekunden ausreichen um zu verwertbaren Signalen zu gelangen. Insbesondere empfiehlt sich durch die kurze Verweildauer innerhalb des Portionierers die dadurch bedingte Temperaturänderung bereits zu erfassen und als Zählimpuls verwerten, da regelmäßig die Temperatur des jeweiligen Lebensmittels aufgrund der Verweildauer kaum und auch nicht annäherungsweise erreicht wird.

Für den erfindungsgemäßen Gedanken ist prinzipiell unerheblich, ob die jeweils ausgegebene Anzahl an Portionen unmittelbar angezeigt oder aber auf irgend eine Art und Weise abgespeichert und durch ein spezielles beispielsweise auf den Portionierer aufzusetzendes Abfragegerät abgerufen und festgestellt werden kann. Entscheidend ist, daß nach Ablauf eines bestimmten Zeitintervalles, so mit Abschluß eines Tages, die verkaufte Menge anhand der durch das erfindungsgemäße Gerät erfaßten Portionen angebbar ist und mit der zugehörigen Geldeinnahme verglichen werden kann. Die Möglichkeit von Eigengeschäften ist dann ausgeschlossen.

Für den Fall, daß der Löffel einen Abstreifer aufweist, kann der Temperaturfühler auch an diesem angeordnet sein.

Für die konkrete bauliche Ausgestaltung des Temperaturfühlers wird im Rahmen der Erfindung empfohlen diesen als Thermoelement oder als temperaturabhängigen Widerstand, insbesondere als Heißleiter oder als Kaltleiter auszubilden.

Ein Thermoelement besteht bekanntermaßen aus zwei verschiedenen Metallen, welche endseitig miteinander verschweißt sind und die eine Thermospannung ausbilden, sofern die beiden den Übergang zwischen beiden Metallen bildenden Enden auf unterschiedlichen Temperaturen gehalten werden. Die sich hierbei ausbildende Thermospannung ist proportional der Temperaturdifferenz. Der Vorteil dieser Ausführungsform besteht in einer schnellen Reaktion auf Temperaturänderungen und auf den unmittelbaren Kontakt mit dem zu messenden Medium. Nachteilig sind vergleichsweise sehr geringe Meßsignale bei kleinen Temperaturänderungen. Ein verstärktes Signal läßt sich bei Verwendung einer allerdings dann einen höheren Eigenraumbedarf erfordernden Thermosäule also einer reihenmäßigen Zusammenschaltung mehrerer Thermoelemente erreichen.

Eine andere Möglichkeit besteht in der Verwendung eines temperaturabhängigen Widerstandes als Temperaturfühler. Man kann hierzu prinzipiell aus Metallen bestehenden Widerstände verwenden, die mit wachsender Temperatur in ihrem Wert zunehmen (Kaltleiter). Demgegenüber wesentlich empfindlicher gegenüber Temperaturschwankungen sind Halbleiterwiderstände mit großem negativem Temperaturkoeffizienten (etwa −3% je Grad Celcius), die sog. Heißleiter. Da im konkreten Fall die Widerstandsänderung des Heißleiters durch Fremderwärmung erfolgt sind sie auch als Thermistoren bezeichenbar und werden in dieser Eigenschaft bereits auf anderen Anwendungsgebieten zur Temperaturmessung eingesetzt.

Grundsätzlich ist denkbar, die Energieversorgung und/ oder auch die elektronischen Bauelemente außerhalb des Portionierers anzubringen und über Zuleitungen eine Verbindung herzustellen. Unter dem Gesichtspunkt der Handhabbarkeit ist jedoch als bevorzugt anzusehen, die Energieversorgung (Batterie) und/oder die elektronischen Bauelemente im Griff des Portionierers unterzubringen, so daß keine Zuleitung erforderlich und keine Behinderungen beim Hantieren auftreten können.

Aufgrund der prinzipiellen Möglichkeit ein und denselben Portionierer für unterschiedliche Lebensmittel einzusetzen, die verschiedene Arbeitsbereiche zur Folge haben, empfiehlt sich eine Einstellmöglichkeit vorzusehen, durch die der Meßbereich des Temperaturfühlers umgestellt werden kann. Bei exakten Ergebnissen kann dann ein und derselbe Portionierer sowohl für Speiseeis als auch für warme Speisen eingesetzt werden. Andernfalls wäre in Abhängigkeit von der Charakteristik des Temperaturfühlers der eine oder andere Meßbereich nicht optimal und könnte zu Fehlanzeigen und unrichtigen Ergebnissen führen.

Ein wesentliches Ziel vorliegender Erfindung ist, die Zählvorrichtung des Portionierers so sicher zu gestalten, daß es nach menschlichem Ermessen und auch bei vorsätzlicher Handhabung nicht zu Fehlanzeigen kommen kann. Aus diesem Grunde wird in weiterer Ausgestaltung einerseits jede mechanische Betätigung ebenso wie Temperturänderungen erfaßt, ein Zählimpuls jedoch dann erst erzeugt, wenn beide Ereignisse gleichzeitig oder evtl. auch zeitig versetzt vorliegen. In altbekannter Weise kann dies durch Verknüpfung mit einem 'UND-Glied' erfolgen. Über den Temperaturfühler erfaßte Temperaturänderungen führen einzig und allein dann zu einem Zählimpuls, wenn zusätzlich eine mechanische Betätigung des Portionierers erfolgt.

Wie bereits erwähnt, kann der Portionierer über eine Zuleitung mit der Energieversorgung oder der der Auswertung dienenden Elektronik verknüpft sein. Gleichzeitig ist es möglich, den Portionierer mit einer Zuleitung deshalb zu versehen, weil beispielsweise im Falle der Verwendung eines Thermoelementes als Temperaturfühler, mit dem anderen Vergleichspunkt des Thermofühlers die Temperatur des zur Reinigung und vorübergehenden Aufbewahrung des Portionierers dienenden Spülwassers erfaßt wird. Das Thermoelement gibt naturgemäß dann erst ein Signal, wenn die Temperatur am durch den Ort des Temperaturfühlers definierten Meßpunkt abweicht von der des Spülwassers. Sinnvoll ist die Abweichung nur in einer Richtung für einen Zählimpuls zu erfassen. Bei der Ausgabe von Speiseeis wird natürlich nur dann gezählt, wenn der Temperaturfühler gegenüber der des Spülwassers abkühlt, bei der Ausgabe von warmen Speisen hingegen erhöht wird. Selbstverständlich kann die Zuleitung einerseits dem soeben beschriebenen Vergleich mit der Temperatur des Portioniererspülwassers dienen und gleichzeitig der Zufuhr von Energie und/oder der Übertragung von Signalen.

Völlig unabhängig von den soeben beschriebenen Ausführungsformen wird von der Erfindung eine andere Lösung vorgeschlagen, die dadurch gekennzeichnet ist, daß innenseitig am Löffel eine Elektrode angeordnet ist, die über eine Leitung mit einer weiteren, in oder unterhalb des zu erfassenden Lebensmittels befindlichen Elektrode in Verbindung steht, wobei in der Leitung ein auf Strom—und/oder Widerstandsmessung ansprechendes Zählgerät angeordnet ist.

Die Erfindung macht sich hier zu nutze, daß die meisten Lebensmittel, Speiseeis und dergleichen eine gewisse Feuchtigkeit und demzufolge eine elektrische Leitfähigkeit aufweisen, die zur Folge hat, daß bei Eintauchen der auf der Innenseite des Löffels befindlichen Elektrode in das Lebensmittel eine elektrisch leitende Verbindung hergestellt wird und ein geschloßener Stromkreis entsteht, wobei das Lebensmittel die elektrische Verbindung zwischen beiden Elektroden herstellt. Im Normal- d.h. nicht eingetauchtem Zustand ist der Widerstand zwischen beiden Elektroden unendlich, so daß kein Strom fließen kann. Entweder per Strom- und/oder Widerstandsmessung zwischen den Elektroden läßt sich das Eintauchen des Löffels erfassen und einem entsprechenden Zählgerät aufgeben. Bei jedem Eintauchen entsteht dann ein neuer, im Zählgerät registrierter Impuls. Es können besondere schaltungstechnische Maßnahmen vorgesehen werden, die eine Zählung dann verhindern, wenn innerhalb kürzester Zeit ein mehrfacher Kontakt entsteht, wie er beim Füllen des Löffels durch mehrmaliges Abschaben entsteht. Als Nachteil ist hier anzusehen, daß zwischen den Portionierer und der in oder unterhalb des Lebensmittels befindlichen Elektrode eine Leitung anzubringen ist, welche die freie Handhabbarkeit zumindest beeinträchtigt.

Die beschriebene Möglichkeit kann selbstverständlich auch gleichzeitig mit vorgenannten, den Einsatz eines Temperaturfühlers erfordernden Maßnahmen gegebenenfalls in Kopplung über ein "UND-" Glied auf das Zählgerät gegeben werden. Die während des Arbeitens auftretenden Ströme und Spannungen können so niedrig gewählt werden, daß sie für die Bedienungsperson ungefährlich und nicht spürbar sind.

Eine besonders einfache bauliche Lösung besteht darin den Löffel selbst als Elektrode zu verwenden. Sie empfiehlt sich insbesondere dann, wenn der Löffel selbst bereits aus elektrisch leitendem Material wie zum Beispiel einem Metall besteht.

Die zusätzliche Anbringung einer Elektrode erübrigt sich dann.

Insbesondere wird vorgeschlagen die Widerstandsmessung über die bekannte Brückenschaltung vorzunehmen. Die Anforderungen an die Meßgenauigkeit können sehr gering sein, wenn einzig und allein bestimmt werden muß, ob der Widerstand zwischen den Elektroden unendlich oder aber während des Eintauchens einen endlichen Wert annimmt.

Weitere Einzelheiten, Merkmale und Vorteile der Erfindung lassen sich dem nachfolgenden Beschreibungsteil entnehmen, in dem eine Ausführungsform der Erfindung in Draufsicht wiedergegeben ist. Sie zeigt einen erfindungsgemäßen Portionierer in prinzipienhafter Darstellung.

In an sich bekannter Weise besteht der gezeigte Portionierer aus einem Löffel 1 und einem aus zwei, relativ gegeneinander bewegbaren Schenkeln 2, 3 bestehenden Griff 4.

Etwa in der Mitte zwischen den beiden Schenkeln 2, 3 verläuft eine Welle 5, die im einen Schenkel 3 drehbar gelagert und im Bereich des Endes des Schenkels 2 mit einem Zahnrad 6 versehen ist, welches seinerseits mit diesem Schenkel 2 kämmt. Das hat zur Folge, daß bei Relativbewegungen der beiden Schenkel 2, 3 auf einander zu durch den Eingriff des Zahnrades 6 die Welle in Rotation versetzt wird und hierbei den am gegenüberliegenden Ende starr befestigten Abstreifer 7 verschwenkt, welcher an dem der Welle 5 gegenüberliegenden Ende im Löffel 1 gelagert ist. Der Abstreifer 7 ist so geformt, daß er an der Innenseite des als Halbschale geformten Löffels 1 entlang bewegbar ist und das dort befindliche Material abschält und herauslöst. Mit Beendigung der Krafteinwirkung kehren die beiden Schenkel 2, 3 unter Einwirkung der Federn 8 in ihre Ausgangsposition zurück. Sämtliche soeben beschriebene Teile sind an sich geläufig.

Entscheidend ist, daß im Löffel 1 ein Temperaturfühler 9 angebracht ist, der über elektrische Leitung 10, 11 mit einem elektronischen Zählwerk 12 mit Anzeige so wie einer der Versorgung mit elektrischer Energie dienenden Batterie 13 verbunden ist. Die Bauteile 12, 13 und überwiegend die Leitungen 10, 11 verlaufen im Inneren des Griffes. Lediglich die Anzeige des Zählwerkes 12 ist von außen einsehbar.

Beim Erfassen des zu portionierenden Lebensmittels mit Hilfe des Löffels 1 erfährt der Temperaturfühler 9 eine Erwärmung oder Abkühlung, die im Zählwerk 12 nach Verwertung und Überarbeitung des erhaltenden Signales als Zählimpuls registriert wird. Die Energieversorgung des elektronischen Zählkreises erfolgt über Batterie 13.

Im Ergebnis erhält man einen Portionierer, der unmittelbar die ausgegebene Gesamtmenge anhand der Anzahl der Portionen angibt und dadurch die entsprechenden Einnahmen errechenbar macht.

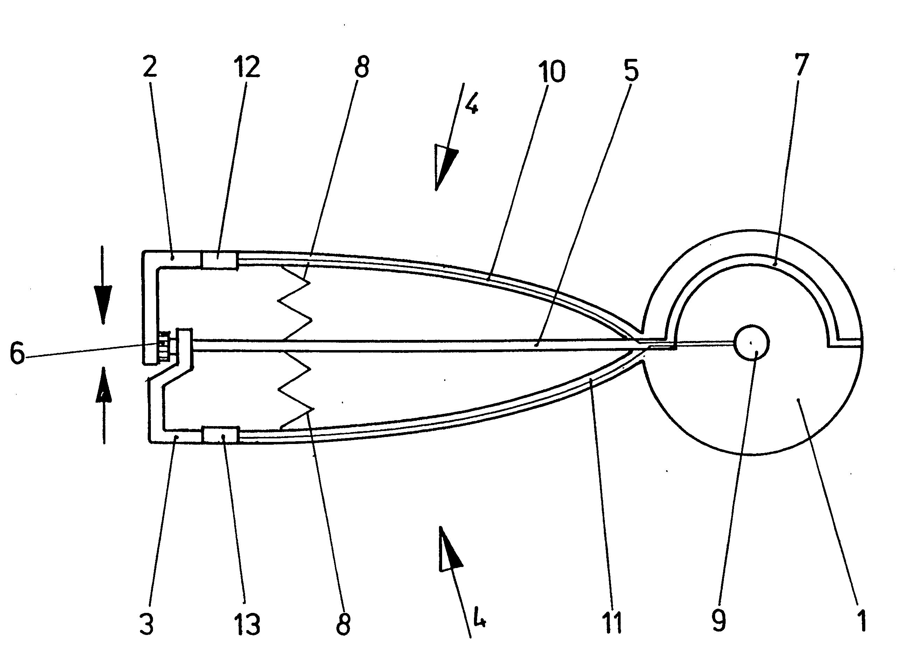

**Patentansprüche**

1. Portionierer für Lebensmittel insbesondere Speiseeis mit einem Griff und einem daran befestigten Löffel, **dadurch gekennzeichnet, daß** im Löffel 1 ein Temperaturfühler 9 angeordnet ist, dessen Temperaturänderungen erfaßt und gezählt werden.

2. Portionierer nach Anspruch 1, **dadurch gekennzeichnet, daß** die Zahl angezeigt wird und-/oder über ein Abfragegerät feststellbar ist.

3. Portionierer nach Anspruch 1 oder 2, **dadurch gekennzeichnet, daß** der Temperaturfühler 9 im Abstreifer 7 des Löffels 1 angeordnet ist.

4. Portionierer nach einem der Ansprüche 1 bis 3, **dadurch gekennzeichnet, daß** der Temperaturfühler 9 ein Thermoelement oder ein temperaturabhängiger Widerstand, insbesondere Heißleiter oder ein Kaltleiter ist.

5. Portionierer nach einem der Ansprüche 1 bis 4, **dadurch gekennzeichnet, daß** die Energieversorgung (Batterie) 13 und/oder elektronischen Bauelemente 12 im Griff 4 untergebracht sind.

6. Portionierer nach einem der Ansprüche 1 bis 5,

gekennzeichnet durch einen einstellbaren Meßbereich des Temperaturfühlers 9.

7. Portionierer nach einem der Ansprüche 1 bis 6, dadurch gekennzeichnet, daß bei mechanischer Betätigung des Portionierers und Temperaturänderung ein Zählimpuls erfaßt wird.

8. Portionierer nach einem der Ansprüche 1 bis 7, dadurch gekennzeichnet, daß der Portionierer eine Zuleitung aufweist, durch die die Temperatur des Spülwassers für den Portionierer erfaßt wird.

9. Portionierer für Lebensmittel insbesondere Speiseeis mit einem Griff und einem daran befestigten Löffel, dadurch gekennzeichnet, daß Innenseitig am Löffel 1 eine Elektrode angebracht ist, die über eine Leitung mit einer weiteren, in oder unterhalb des zu erfassenden Lebensmittels befindlichen Elektrode in Verbindung steht, wobei in der Leitung ein auf Strom- und/oder Widerstandsmessung ansprechendes Zählgerät angeordnet ist.

10. Portionierer nach Anspruch 9, dadurch gekennzeichnet, daß der Löffel 1 die Elektrode ist.

11. Portionierer nach Anspruch 9 oder 10, dadurch gekennzeichnet, daß die Widerstandsmessung über eine Brückenschaltung erfolgt.

## Claims

1. Portioning scoop for food, especially ice cream having a handle and spoon affixed thereto wherein a temperature sensor 9 is disposed in said spoon 1, whose temperature changes are recorded and counted.

2. Portioning scoop according to claim 1 wherein the number is displayed and/or ascertained by an interrogation unit.

3. Portioning scoop according to claims 1 or 2 wherein said temperature sensor 9 is disposed in the scraper 7 of said spoon 1.

4. Portioning scoop according to one of claims 1 to 3 wherein said temperature sensor 9 comprises a thermocouple or a temperature dependent resistor, especially an NTC or PTC thermistor.

5. Portioning scoop according to one of claims 1 to 4 wherein the power supply (battery) 13 and/or electronic components 12 are disposed in said handle 4.

6. Portioning scoop according to one of claims 1 to 5 wherein said temperature sensor 9 has an adjustable measuring range.

7. Portioning scoop according to one of claims 1 to 6 wherein a counting impulse is registered upon mechanical operation of said portioning scoop and a temperature change.

8. Portioning scoop according to one of claims 1 to 7 wherein said portioning scoop comprises a lead that records the temperature of the washing water for said portioning scoop.

9. Portioning scoop for food, especially ice cream having a handle and a spoon affixed thereto wherein an electrode is attached on the inside of said spoon 1, which is connected to a line with another electrode disposed in or beneath said food, whereby a counting mechanism responding to a current and/or resistance measurement is disposed in said line.

10. Portioning scoop according to claim 9 wherein said spoon 1 forms said electrode.

11. Portioning scoop according to claim 9 or 10 wherein said resistance measurement is achieved by means of a bridge circuit.

## Revendications

1. Préportionneur pour produits alimentaires, notamment glaces, comportant une poignée et une cuillère fixée à celle-ci, caractérisé en ce que dans la cuillère 1 est disposée une sonde de température 9 dont les changements de température sont saisis et comptés.

2. Préportionneur selon la revendication 1, caractérisé en ce que le nombre est affiché et/ou peut être constaté par l'intermédiaire d'un appareil d'interrogation.

3. Préportionneur selon la revendication 1 ou 2, caractérisé en ce que la sonde de température 9 est disposée dans le racleur 7 de la cuillère 1.

4. Préportionneur selon l'une quelconque des revendications de 1 à 3, caractérisé en ce que la sonde de température 9 est un thermocouple ou une résistance sous l'influence de la température, notamment un thermistor NTC ou un thermistor PTC.

5. Préportionneur selon l'une quelconque des revendications de 1 à 4, caractérisé en ce que l'alimentation en énergie (pile) 13 et/ou des éléments électroniques 12 sont logés dans la poignée 4.

6. Préportionneur selon l'une quelconque des revendications de 1 à 5, caractérisé par un champ de mesure réglable de la sonde de température 9.

7. Préportionneur selon l'une quelconque des revendications de 1 à 6, caractérisé en ce que lors d'un actionnement mécanique du préportionneur et d'un changement de température une impulsion de comptage est saisie.

8. Préportionneur selon l'une quelconque des revendications de 1 à 7, caractérisé en ce que le préportionneur présente un conducteur par lequel la température de l'eau de vaisselle pour le préportionneur est saisie.

9. Préportionneur pour produits alimentaires, notament glaces, comportant une poignée et une cuillère fixée à celle-ci, caractérisé en ce qu'une électrode est disposée à la face intérieure de la cuillère 1 qui est reliée par une conduite à une autre électrode se trouvant dans ou au-dessous du produit alimentaire à saisir, un compteur qui réagit à la mesure du courant et/ou à la détermination de la résistance étant disposé dans la conduite.

10. Préportionneur selon la revendication 9, caractérisé en ce que la cuillère 1 est l'électrode.

11. Préportionneur selon la revendication 9 ou 10, caractérisé en ce que la détermination de la résistance s'effectue par un diplexeur.

EP 0 368 879 B1